Europäisches Patentamt

European Patent Office

Office européen des brevets

(11) Publication number: **0 393 524**
A2

# EUROPEAN PATENT APPLICATION

(21) Application number: **90107079.7**

(51) Int. Cl.⁵: **C04B 35/58**

(22) Date of filing: **12.04.90**

(30) Priority: **17.04.89 JP 95384/89**
**17.04.89 JP 95385/89**

(43) Date of publication of application:
**24.10.90 Bulletin 90/43**

(84) Designated Contracting States:
**DE FR GB NL**

(71) Applicant: **KAWASAKI STEEL CORPORATION**
**No. 1-28, 1-Chome Kitahonmachi-Dori**
**Chuo-Ku, Kobe-Shi Hyogo 651(JP)**

(72) Inventor: **Nakano, Tadashi, c/o Research**
**Laboratories of**
**Kawasaki Steel Corporation, 1,**
**Kawasaki-cho, Chiba**
**Chiba-ken 260(JP)**
Inventor: **Yokoi, Makoto, c/o Research**
**Laboratories of**
**Kawasaki Steel Corporation, 1,**
**Kawasaki-cho, Chiba**
**Chiba-ken 260(JP)**
Inventor: **Kumagai, Masato, c/o Research**
**Laboratories of**
**Kawasaki Steel Corporation, 1,**
**Kawasaki-cho, Chiba**

**Chiba-ken 260(JP)**
Inventor: **Funahashi, Tosihiko, c/o Research**
**Laboratories of**
**Kawasaki Steel Corporation, 1,**
**Kawasaki-cho, Chiba**
**Chiba-ken 260(JP)**
Inventor: **Kanemaru, Takao, c/o Research**
**Laboratories of**
**Kawasaki Steel Corporation, 1,**
**Kawasaki-cho, Chiba**
**Chiba-ken 260(JP)**
Inventor: **Mega, Tetsuya, c/o Research**
**Laboratories of**
**Kawasaki Steel Corporation, 1,**
**Kawasaki-cho, Chiba**
**Chiba-ken 260(JP)**
Inventor: **Yamamura, Takashi, c/o Research**
**Laboratories of**
**Kawasaki Steel Corporation, 1,**
**Kawasaki-cho, Chiba**
**Chiba-ken 260(JP)**

(74) Representative: **Patentanwälte Grünecker,**
**Kinkeldey, Stockmair & Partner**
**Maximilianstrasse 58**
**D-8000 München 22(DE)**

(54) **Method of making a sintered body of aluminium nitride.**

(57) A method of making an aluminium nitride sintered body having more than 95% of relative density, more than 160W/m-K of thermal conductivity, less than $0.5\mu$m, in Ra, of surface roughness, more than $10^{12}\Omega$-cm of volume resistivity, and uniform color and homogeneous appearance. A sintering aid including 0.05-5 parts by weight, in terms of oxide, of oxides of rare earth metals and 0.01-5 parts by weight of one or more elements selected from the group consisting of metallic lithium, metallic beryllium, metallic magnesium, boron, silicon, sulfur, phosphor, arsenic and metallic zinc, is added to 100 parts by weight of powders of aluminium nitride. The mixture is subjected to forming and is sintered in a non-oxidizing atmosphere at a temperature of 1400-2000° C.

EP 0 393 524 A2

## Method of Making a Sintered Body of Aluminium Nitride

BACKGROUND OF THE INVENTION

1. Field of the Invention

The present invention relates to a method of making a sintered body of aluminium nitride which has an improved thermal conductivity. Sintered bodies of aluminium nitride having a high thermal conductivity may be used as electrical insulating materials, a typical example of which is a substrate for semiconductor devices.

2. Description of the Prior Art

As a result of the recent trends of the semiconductor technology toward high density integration, high speed operation, and high power output, the following problems have become closed up with respect to the substrates for semiconductor devices:

(i) How efficiently the heat emanating from the semiconductor tips should be transmitted out of the system.

(ii) As the operating speed of semiconductor devices is increased, the delay in signal transfer that is encountered in the region of the substrate or package becomes a serious problem.

(iii)To increase the size of the semiconductor tip would, in turn, increase the difference in thermal dilatation between the tip and the substrate. This lowers the reliability of bonding.

(iv) In a high power semiconductor tip, the applied voltage is correspondingly elevated. Therefore, there is a problem of dielectric breakdown.

In order to overcome these problems encountered by the semiconductor industries, it is desirable that, in place of the conventional aluminium oxide, a new ceramic material for semiconductor substrates or packages be developed which presents the following properties:

(a) High thermal conductivity.

(b) Superior electric insulation.

(c) Good high-frequency property, i.e., a low dielectric constant and a low dielectric loss.

(d) Coefficient of thermal dilatation being close to that of Si or GaAs.

(e) Chemical stability.

(f) High mechanical strength.

(g) Ease of circuit forming.

(h) Possibility of hermetic sealing.

Generally, it has been considered in the art that aluminium nitride is a favorable material that inherently possesses the above-listed properties.

For practical application, however, it is necessary that the ceramic of aluminium nitride meets with the minimum requirements which are as follows:

(1) The sintered body must be homogeneous, compact and dense. It must have a high mechanical strength. Desirably, it must have a relative density of more than 95%.

(2) The thermal conductivity must be as high as possible.

(3) It must have a high volume resistivity. More than $10^{12}\Omega$-cm of volume resistivity is necessary.

(4) The surface of the sintered body must be smooth and flat.

Although the requirement (4) above is not essential from the point of view of material property, the surface smoothness and flatness will nevertheless enable to omit additional machining and, therefore, contribute to reduction in the production cost where the substrates are manufactured on a mass production basis. For this reason, the requirement (4) is considered essential for the purpose of production. Practically, it is desirable that the surface of the substrates after sintering and without machining have a surface roughness in Ra of less than 0.5μm and a bowing of less than 0.1mm/50mm.

In the prior art, attempts have been made with a view to satisfy the requirements (1) and (2) above. For example, Japanese Patent "Kokoku" Publication No. 46-41003 proposes the use of $Y_2O_3$ as a sintering aid while Japanese Patent "Kokoku" Publication No. 58-49510 contemplates the use of CaO, BaO, SrO and the like as sintering aids. In either case, a ceramic having a thermal conductivity in the order of 100W/m-K has been obtained. However, depending on the particular applications, sintered bodies having a still higher

2

thermal conductivity have been required by the current users.

Also known in the art are methods for the preparation of sintered bodies of aluminium nitride having a higher thermal conductivity:

(I) a method comprising the step of heat treating AlN powders in a non-oxidizing atmosphere at a temperature above 1600°C to reduce the oxygen content of the powders, followed by sintering (Japanese Patent "Kokai" Publication No. 61-201668); and,

(II) a method including the step of hot-pressing AlN powders, after heat treatment, at 1800-2300°C in a non-oxidizing atmosphere under a pressure greater than 20Kg/cm$^2$ to obtain a sintered body having a thermal conductivity up to 210W/m-K (Japanese Patent "Kokai" Publication No. 61-201668).

Either of these methods is considerably affected by the sintering-retardent tendency of AlN because a thin layer of oxygen at the outer boundary of respective AlN powders has been removed. Therefore, these methods require expensive hot-pressing in order to obtain the desired sintered bodies and are not suitable for mass production.

The Journal of the Ceramic Society of Japan (Yogyo-Kyokai-Shi), 25th Meeting of Ceramic Fundamentals, 1D03, 3H03 (January 1987), describes a method of sintering of AlN having a high thermal conductivity characterized by sintering a formed green AlN body in a reducing atmosphere at 1850-1950°C for 2-96 hours. This method, however, is not successful in obtaining a sintering adapted for use as AlN substrate having a superior thermal conductivity.

Japanese Patent "Kokai" Publication No. 62-52181 discloses a method of producing an AlN sintering characterized by sintering at 1600-2100°C a formed green AlN body containing, as sintering aids, 0.2-3.4% by weight of carbon and 0.1-10% by weight of Yttria. This publication is silent in pointing out the problems inherent in the method (1) that the obtained sintered body has a poor density, (2) that the sintered body has a low insulation resistance, and (3) that there are heterogeneity in color and heterogeneity in sintering. Due to the presence of these problems, it is considered that this method is not satisfactory in producing AlN substrates.

Japanese Patent "Kokai" publication Nos. 61-127667 and 61-219763 describe methods wherein $Y_2O_3$ and C are added to AlN as sintering aids. However, these methods are not satisfactory in producing AlN substrates for the same reason as just mentioned. This is also applicable to the method disclosed in Japanese Patent "Kokai" publication No. 63-236765.

## SUMMARY OF THE INVENTION

An object of the invention is to provide a method of producing a sintered body of AlN which is dense and compact, which has a high thermal conductivity and a high electric resistance, which possesses those properties that are suitable for such a material as represented by an electric insulating substrate, and which is inexpensive to manufacture.

The present inventors have conducted researches and developments in an attempt to increase the thermal conductivity of sintered body of aluminium nitride as well as to impart the necessary properties required for substrate and, as a result, have discovered the following findings that have resulted in the present invention.

A ceramic sintered body having a high thermal conductivity has been obtained by sintering, in a non-oxidizing atmosphere, a green sheet made from AlN powders and, added thereto, oxides of the rare earth metals (REM) and one or more elements selected from the group consisting of metallic lithium, metallic beryllium, metallic magnesium, boron, silicon, sulfur, phosphor, arsenic and metallic zinc. As used herein, the term "REM" refers to yttrium, scandium and lanthanoids.

It has been found that this sintered body meets with the above-mentioned requirements demanded for insulating substrates.

It has also been found that a superior sintered body of AlN is obtainable by using a sintering aid which comprises, in addition to the above-mentioned oxides of REM and metal elements, one or more compounds selected from the group consisting of metal borides, metal nitrides, metal phosphides, metal sulfides, metal silicides and metal hydrides. Additionally, a favorable result has been obtained by substituting a proper amount of carbon for the metal elements mentioned.

Based on the foregoing findings, the present inventors have made extensive investigations to determine the proper selection of, as well as the optimum amount of, the elements and the compounds thereof which should be added as sintering aid. By properly selecting the elements or their compounds to be added as sintering aid and by suitably limiting the range of addition thereof, it is possible to obtain a sintered body of aluminium nitride which has a high thermal conductivity and a high electric insulating property and which is characterized by having (1) more than 95% of relative density, (2) more than 160W/m-K of thermal conductivity, (3) less than 0.5μm, in Ra, of the surface roughness after sintering, (4) more than $10^{12}Ω$-cm of volume resistivity, and (5) uniform color and homogeneous appearance.

In one aspect of the invention, the method of making the above-mentioned sintered body comprises the steps of: adding to 100 parts by weight of powders of aluminium nitride a sintering aid comprising;

(A) 0.05-5 parts by weight, in terms of oxide, of one or more compounds selected from the group consisting of yttria, oxide of scandium and oxide of lanthanoids; and,

(B) 0.01-5 parts by weight of one or more elements selected from the group consisting of metallic lithium, metallic beryllium, metallic magnesium, boron, silicon, sulfur, phosphor, arsenic and metallic zinc; forming the thus obtained mixture; and, sintering the thus formed product in a non-oxidizing atmosphere at a temperature of 1400-2000° C.

In another aspect, in addition to (A) and (B) above, the sintering aid further comprises;

(C) 0.01-5 parts by weight of one or more compounds selected from the group consisting of metal borides, metal nitrides, metal phosphides, metal sulfides, metal silicides and metal hydrides.

In a still another aspect, the method of making a sintered body according to the invention comprises the steps of: adding to 100 parts by weight of powders of aluminium nitride a sintering aid comprising;

(A) 0.05-5 parts by weight, in terms of oxide, of one or more compounds selected from the group consisting of yttria, oxide of scandium and oxide of lanthanoids;

(D) 0.01-2 parts by weight, in terms of carbon, of one or more species selected from the group consisting of carbon and those compounds which generate carbon by thermal decomposition when heated at a temperature below 2000° C; and,

(C) 0.01-5 parts by weight of one or more compounds selected from the group consisting of metal borides, metal nitrides, metal phosphides, metal sulfides, metal silicides and metal hydrides; forming the thus obtained mixture; and, sintering the thus formed product in a non-oxidizing atmosphere at a temperature of 1400-2000° C.


DESCRIPTION OF THE PREFERRED EMBODIMENTS

Although the mechanism in which the multiple addition of the above-mentioned sintering aid is effective in producing sintered bodies having the intended properties is not fully known, it is considered as follows.

The effect of the additives (A) and (B) above will be discussed first.

It is considered that a certain oxides of aluminium, if not completely in the form of $Al_2O_3$, exist at the outer layer of AlN. Supposing such oxides to be $Al_2O_3$, it reacts with the additive (A), for example, $Y_2O_3$, to form a liquid phase $xAl_2O_3-yY_2O_3$ which promotes sintering of AlN under the principle of liquid phase sintering to increase the density of the sintered body.

On the other hand, either of metallic lithium, metallic beryllium, metallic magnesium, boron, silicon, sulfur, phosphor, arsenic and metallic zinc, as the additive (B), is a strong reducing agent and reacts with oxygen contained as impurity in aluminium nitride to remove oxygen therefrom. Thus, during the stage from the liquid phase formation to sintering, oxygen at the surface of AlN is reduced by the additive (B) and is decreased in content, whereby the grains of AlN are purified.

It is considered that the resulting sintered body is ideal for use in substrate in that it has a high thermal conductivity and is highly electrically insulating.

With regard to the amount of addition, it is believed that less than 0.05 parts by weight of the additive (A) is not effective in increasing the density of the sintered body to a satisfactory degree. With more than 5 parts by weight of the additive (A), the amount of intergranular boundary phase is increased so that the thermal conductivity is lowered.

Regarding the amount of the additive (B) being the reducing agent, if less than 0.01 parts by weight of the additive (B) is added to 100 parts by weight of AlN, the distribution of the intergranular boundary phase becomes heterogeneous so that a striped pattern is created. With more than 2 parts by weight thereof, yttrium nitride (YN) tends to remain so that local coloring takes place thereby impairing the appearance. By further increasing the amount of addition, the shrinkage speed at the time of temperature rise is retarded so that the intergranular boundary phase is volatilized whereby sintering is hindered.

It will be noted that the additive (C), i.e., metal borides, metal nitrides, metal phosphides, metal sulfides, metal silicides or metal hydrides, is a compound which is apt to be combined with oxygen. When the additive (C) is added in addition to the additives (A) and (B), it readily reacts with oxygen being present as impurity in the crystals of AlN and remove the same therefrom. At the same time, the products of reaction in the liquid phase permeates into the intergranular spaces thereby promoting sintering. The additive (A) which has been added together is also transformed at a high temperature into a liquid phase and also acts to intensively promote sintering. Further, due to its strong reducing nature, the additive (B) is combined with oxygen during the course of sintering and causes the products to be removed by evaporation thereby further increasing the thermal conductivity of AlN.

The amount of addition of the additive (C) is 0.01-5 parts by weight with respect to 100 parts by weight of AlN. Less than 0.01 parts by weight of the additive (C) is not effective in removing the impurity oxygen, while addition thereof in more than 5 parts by weight would not serve to increase the effect of addition.

As mentioned, among the additives (A), (B) and (C), the additive (B) may be substituted with the additive (D). The mechanism in which the multiple addition of the additive (D) is effective will be discussed next.

As described, the oxides present at the outer layer of AlN reacts with the additive (A), for example, $Y_2O_3$, to form a liquid phase $xAl_2O_3-yY_2O_3$. In this manner, the oxides at the surface of AlN is necessary in order to increase the density of the sintered body by addition of the additive (A).

However, the presence of oxides in any excessive amount causes the oxides to be dispersed into the grains during sintering thereby substantially lowering the thermal conductivity. The function of the additive (D) is to remove by decomposition the excessive $Al_2O_3$. At temperatures lower than a temperature at which the liquid phase is formed, oxygen at the surface of AlN is reduced by the additive (D) as a reducing agent so that the grains of AlN are purified as the oxygen content is decreased.

The additive (D) may be in a variety of forms such as carbon black, graphite, and amorphous carbon and may be added in the range of 0.01-2 parts by weight.

If the amount of the additive (D) is less than 0.01 parts by weight, deoxidation is insufficient. With addition thereof in more than 2 parts by weight, yttrium nitride (YN) tends to remain so that local coloring takes place thereby impairing the appearance. By further increasing the amount of addition, the amount of the intergranular boundary phase formed becomes insufficient. As a result, the shrinkage speed at the time of temperature rise is retarded so that sintering is hindered.

A specific form of the method according to the invention will be described below by way of example with respect to a case wherein $Y_2O_3$ is selected as the additive (A) and metallic zinc is selected as the additive (B).

Added to 100 parts by weight of aluminium nitride powders having an average grain size of 0.1-3μm are 0.5-5 parts by weight of $Y_2O_3$ and 0.01-0.5 parts by weight of metallic zinc. The product is then subjected to mixing and dispersion. After adding a binder, the resultant product is subjected to forming to prepare a formed body. Forming may be carried out by any well-known method such as doctor blade method, press forming, slip casting process, and extrusion forming. The formed body thus obtained is sintered in a non-oxidizing atmosphere at 1400-2000°C.

In order to obtain a sintered body of AlN having a high thermal conductivity, it is desirable that oxygen as impurity in AlN be as little as possible, preferably less than about 1 part by weight.

Sintering may be carried out in a crucible made of AlN. Sintering below 1400°C would interrupt progress of sintering. Sintering above 2000°C would result in the formation of micro pores due to sublimation of AlN grains and, therefore, power the thermal conductivity.

Sintering in an atmosphere having oxygen content of more than 500 ppm would cause oxidation of AlN so that it would be impossible to obtain a sintered body having a high thermal conductivity.

According to the invention, it is possible to manufacture sintered bodies of aluminium nitride having a thermal conductivity of more than 160W/m-K. Electrical insulating materials made from these sintered bodies may be used in the industries are substrate for hybrid IC, substrate for Therdip, as well s heat sink for powder transistor, power diode, and laser diode.

Example 1

$Y_2O_3$ powders having an average gain size of 1μm and Mg powders having an average grain size 6μm were added respectively in various amounts as indicated in Table 1 to 100 parts by weight of AlN powders having an average grain size of 1μm, together with a mixed solvent of toluene and ethanol. Each mixture was intimately mixed and adequately ball-milled and polyvinylbutyral resin was added thereto as a binder to form an AlN slurry. Each slurry was then subjected to forming by the doctor blade method to form green sheets which were then stamped into formed green products in the form of square segments 65X65mm.

The products were dewaxed in a nitrogen ambient at 700°C and were thereafter sintered at 1800°C in a nitrogen atmosphere under the atmospheric pressure for 3 hours to obtain AlN plates.

The resultant AlN plates were subjected to testing and measurement for appearance, relative density, thermal conductivity, insulation resistance, and surface roughness, to determine those properties which are generally required for insulating substrate. The results are shown in Table 1.

Among the measured properties, the relative density was calculated by measuring the density of respective sintered bodies according to the Archimedes method and by driving it by the true density thereof and is indicated in Table 1 in percentage.

The thermal conductivity was measured by laser flush method. The insulation resistance was measured with an insulation resistance tester. The surface roughness (Ra) was measured by a surface roughness tester.

Table 1

| No. | Y$_2$O$_3$ parts by weight | Mg parts by weight | Thermal Conductivity W/mK | Insulation Resistance Ωcm | Strength kg/mm$^2$ | Relative Density % | Surface Roughness Ra(μm) | Appearance | Remark |
|---|---|---|---|---|---|---|---|---|---|
| 1 | 0.1 | 0 | 130 | >10$^{14}$ | 28 | 98.0 | 0.33 | Irregular Color | Comparative |
| 2 | 0.1 | 0.05 | 175 | >10$^{14}$ | 30 | 99.1 | 0.28 | good | Example |
| 3 | 0.1 | 0.10 | 179 | >10$^{14}$ | 30 | 99.4 | 0.30 | good | " |
| 4 | 0.1 | 0.30 | 188 | >10$^{14}$ | 31 | 99.5 | 0.31 | good | " |
| 5 | 0.1 | 0.50 | 191 | >10$^{14}$ | 30 | 99.7 | 0.30 | good | " |
| 6 | 0.1 | 2.00 | 192 | >10$^{14}$ | 31 | 99.8 | 0.30 | good | " |
| 7 | 1.0 | 0.05 | 203 | >10$^{14}$ | 33 | 99.9 | 0.32 | good | " |
| 8 | 1.0 | 0.10 | 210 | >10$^{14}$ | 34 | 99.8 | 0.33 | good | " |
| 9 | 1.0 | 0.30 | 214 | >10$^{14}$ | 33 | 99.9 | 0.33 | good | " |
| 10 | 1.0 | 0.50 | 218 | >10$^{14}$ | 33 | 100.0 | 0.34 | good | " |
| 11 | 2.0 | 0.05 | 214 | >10$^{14}$ | 36 | 100.0 | 0.34 | good | " |
| 12 | 2.0 | 0.10 | 218 | >10$^{14}$ | 34 | 100.0 | 0.35 | good | " |
| 13 | 2.0 | 0.30 | 220 | >10$^{14}$ | 35 | 100.0 | 0.33 | good | " |
| 14 | 2.0 | 0.50 | 221 | >10$^{14}$ | 33 | 100.0 | 0.35 | good | " |
| 15 | 2.0 | 2.00 | 218 | >10$^{14}$ | 34 | 100.0 | 0.34 | good | " |
| 16 | 3.0 | 0.05 | 200 | >10$^{14}$ | 35 | 100.0 | 0.38 | good | " |
| 17 | 3.0 | 0.10 | 199 | >10$^{14}$ | 36 | 100.0 | 0.36 | good | " |
| 18 | 3.0 | 0.30 | 204 | >10$^{14}$ | 39 | 100.0 | 0.37 | good | " |
| 19 | 3.0 | 0.50 | 206 | >10$^{14}$ | 32 | 100.0 | 0.36 | good | " |
| 20 | 3.0 | 2.00 | 199 | >10$^{14}$ | 34 | 100.0 | 0.38 | good | " |
| 21 | 5.0 | 0.05 | 190 | >10$^{14}$ | 31 | 99.2 | 0.39 | good | " |
| 22 | 5.0 | 0.10 | 191 | >10$^{14}$ | 34 | 99.2 | 0.38 | good | " |
| 23 | 5.0 | 0.30 | 188 | >10$^{14}$ | 34 | 99.2 | 0.40 | good | " |
| 24 | 5.0 | 0.50 | 186 | >10$^{14}$ | 33 | 99.0 | 0.42 | good | " |
| 25 | 5.0 | 2.00 | 180 | >10$^{14}$ | 32 | 99.1 | 0.40 | good | " |

Example 2

AlN plates were made in the same manner as in Example 1, except that, in place of Mg powders used in Example 1, various elements as shown in Table 2 were employed. The plates were tested for appearance, relative density, thermal conductivity, insulation resistance and surface roughness and the results are indicated in Table 2.

Table 2

| No. | $Y_2O_3$ parts by weight | Additive | parts by weight | Thermal Conductivity W/mK | Insulation Resistance $\Omega$cm | Strength kg/mm$^2$ | Relative Density % | Surface Roughness Ra($\mu$m) | Appearance |
|---|---|---|---|---|---|---|---|---|---|
| 1 | 2.0 | Li | 0.05 | 198 | $>10^{14}$ | 34 | 100.0 | 0.36 | good |
| 2 | 2.0 | Li | 0.50 | 190 | $>10^{14}$ | 35 | 100.0 | 0.37 | good |

| | | | | | | | | | |
|---|---|---|---|---|---|---|---|---|---|
| 3 | 2.0 | Li | 5.00 | 175 | $>10^{14}$ | 33 | 100.0 | 0.34 | good |
| 4 | 2.0 | Be | 0.05 | 230 | $>10^{14}$ | 36 | 100.0 | 0.35 | good |
| 5 | 2.0 | Be | 0.50 | 236 | $>10^{14}$ | 39 | 100.0 | 0.32 | good |
| 6 | 2.0 | Be | 5.00 | 233 | $>10^{14}$ | 39 | 100.0 | 0.34 | good |
| 7 | 2.0 | Si | 0.05 | 170 | $>10^{14}$ | 34 | 100.0 | 0.34 | good |
| 8 | 2.0 | Si | 0.50 | 172 | $>10^{14}$ | 35 | 100.0 | 0.35 | good |
| 9 | 2.0 | Si | 5.00 | 171 | $>10^{14}$ | 32 | 100.0 | 0.34 | good |
| 10 | 2.0 | B | 0.05 | 210 | $>10^{14}$ | 33 | 100.0 | 0.33 | good |
| 11 | 2.0 | B | 0.50 | 214 | $>10^{14}$ | 31 | 100.0 | 0.35 | good |
| 12 | 2.0 | B | 5.00 | 218 | $>10^{14}$ | 32 | 100.0 | 0.34 | good |
| 13 | 2.0 | S | 0.05 | 179 | $>10^{14}$ | 34 | 100.0 | 0.35 | good |
| 14 | 2.0 | S | 0.50 | 190 | $>10^{14}$ | 38 | 100.0 | 0.35 | good |
| 15 | 2.0 | S | 5.00 | 191 | $>10^{14}$ | 35 | 100.0 | 0.33 | good |
| 16 | 2.0 | As | 0.05 | 191 | $>10^{14}$ | 33 | 100.0 | 0.34 | good |
| 17 | 2.0 | As | 0.50 | 193 | $>10^{14}$ | 32 | 100.0 | 0.32 | good |
| 18 | 2.0 | As | 5.00 | 193 | $>10^{14}$ | 32 | 100.0 | 0.34 | good |
| 19 | 2.0 | P | 0.05 | 210 | $>10^{14}$ | 34 | 100.0 | 0.35 | good |
| 20 | 2.0 | P | 0.50 | 208 | $>10^{14}$ | 39 | 100.0 | 0.34 | good |
| 21 | 2.0 | P | 5.00 | 211 | $>10^{14}$ | 31 | 100.0 | 0.33 | good |
| 22 | 2.0 | Zn | 0.05 | 207 | $>10^{14}$ | 30 | 100.0 | 0.34 | good |
| 23 | 2.0 | Zn | 0.50 | 209 | $>10^{14}$ | 29 | 100.0 | 0.35 | good |
| 24 | 2.0 | Zn | 5.00 | 208 | $>10^{14}$ | 34 | 100.0 | 0.34 | good |
| 25 | 2.0 | Zn | 3.00 | 212 | $>10^{14}$ | 36 | 100.0 | 0.32 | good |
| | | B | 3.00 | | | | | | |
| 26 | 2.0 | Li | 0.05 | 210 | $>10^{14}$ | 37 | 100.0 | 0.37 | good |
| | | B | 2.00 | | | | | | |
| 27 | 2.0 | P | 1.00 | 222 | $>10^{14}$ | 39 | 100.0 | 0.34 | good |
| | | S | 1.00 | | | | | | |
| 28 | 2.0 | Li | 1.00 | 228 | $>10^{14}$ | 38 | 100.0 | 0.31 | good |
| | | Zn | 1.00 | | | | | | |
| | | B | 1.00 | | | | | | |

## Example 3

AIN plates were made in the same manner as in Example 1, except that, in place of $Y_2O_3$ powders used in Example 1, oxides of various rare earth metals as shown in Table 3 were employed. The plates were tested for appearance, relative density, thermal conductivity, insulation resistance and surface roughness and the results are indicated in Table 3.

Table 3

| Additive | | Mg parts by weight | Thermal Conductivity W/mK | Insulation Resistance Ωcm | Strength kg/mm² | Relative Density % | Surface Roughness Ra(μm) | Appearance |
|---|---|---|---|---|---|---|---|---|
| | parts by weight | | | | | | | |
| La₂O₃ | 0.01 | 1.0 | 184 | >10¹⁴ | 30 | 99.8 | 0.33 | good |
| | 0.10 | 1.0 | 231 | >10¹⁴ | 32 | 99.9 | 0.33 | good |
| | 1.00 | 1.0 | 232 | >10¹⁴ | 33 | 100.0 | 0.34 | good |
| | 2.00 | 1.0 | 223 | >10¹⁴ | 36 | 100.0 | 0.36 | good |
| | 5.00 | 1.0 | 225 | >10¹⁴ | 31 | 100.0 | 0.37 | good |
| CeO₂ | 0.01 | 1.0 | 191 | >10¹⁴ | 34 | 99.8 | 0.28 | good |
| | 0.10 | 1.0 | 193 | >10¹⁴ | 32 | 99.8 | 0.29 | good |
| | 1.00 | 1.0 | 193 | >10¹⁴ | 31 | 99.9 | 0.31 | good |
| | 2.00 | 1.0 | 200 | >10¹⁴ | 33 | 100.0 | 0.34 | good |
| | 5.00 | 1.0 | 204 | >10¹⁴ | 33 | 100.0 | 0.34 | good |
| Nd₂O₃ | 0.01 | 1.0 | 193 | >10¹⁴ | 33 | 99.9 | 0.30 | good |
| | 0.10 | 1.0 | 198 | >10¹⁴ | 32 | 100.0 | 0.30 | good |
| | 1.00 | 1.0 | 211 | >10¹⁴ | 34 | 100.0 | 0.31 | good |

| | | | | | | | | |
|---|---|---|---|---|---|---|---|---|
| | 2.00 | 1.0 | 232 | $>10^{14}$ | 35 | 100.0 | 0.34 | good |
| | 5.00 | 1.0 | 208 | $>10^{14}$ | 34 | 100.0 | 0.33 | good |
| $Sm_2O_3$ | 0.01 | 1.0 | 179 | $>10^{14}$ | 33 | 99.9 | 0.29 | good |
| | 0.10 | 1.0 | 197 | $>10^{14}$ | 32 | 100.0 | 0.32 | good |
| | 1.00 | 1.0 | 205 | $>10^{14}$ | 31 | 100.0 | 0.38 | good |
| | 2.00 | 1.0 | 214 | $>10^{14}$ | 32 | 100.0 | 0.40 | good |
| | 5.00 | 1.0 | 211 | $>10^{14}$ | 38 | 100.0 | 0.42 | good |
| $Gd_2O_3$ | 0.01 | 1.0 | 183 | $>10^{14}$ | 29 | 99.9 | 0.33 | good |
| | 0.10 | 1.0 | 193 | $>10^{14}$ | 31 | 100.0 | 0.32 | good |
| | 1.00 | 1.0 | 218 | $>10^{14}$ | 33 | 100.0 | 0.34 | good |
| | 2.00 | 1.0 | 209 | $>10^{14}$ | 34 | 100.0 | 0.34 | good |
| | 5.00 | 1.0 | 194 | $>10^{14}$ | 34 | 100.0 | 0.39 | good |
| $Dy_2O_3$ | 0.01 | 1.0 | 187 | $>10^{14}$ | 34 | 99.9 | 0.31 | good |
| | 0.10 | 1.0 | 190 | $>10^{14}$ | 35 | 99.9 | 0.32 | good |
| | 1.00 | 1.0 | 215 | $>10^{14}$ | 34 | 100.0 | 0.34 | good |
| | 2.00 | 1.0 | 218 | $>10^{14}$ | 34 | 100.0 | 0.36 | good |
| | 5.00 | 1.0 | 209 | $>10^{14}$ | 32 | 100.0 | 0.35 | good |
| $Yb_2O_3$ | 0.01 | 1.0 | 182 | $>10^{14}$ | 32 | 99.8 | 0.31 | good |
| | 0.10 | 1.0 | 183 | $>10^{14}$ | 34 | 99.9 | 0.31 | good |
| | 1.00 | 1.0 | 194 | $>10^{14}$ | 34 | 100.0 | 0.32 | good |
| | 2.00 | 1.0 | 201 | $>10^{14}$ | 36 | 100.0 | 0.36 | good |
| | 5.00 | 1.0 | 202 | $>10^{14}$ | 33 | 100.0 | 0.34 | good |
| $CeO_2$ | 0.80 | 1.0 | 230 | $>10^{14}$ | 34 | 100.0 | 0.36 | good |
| $Al_2O_3$ | 0.90 | | | | | | | |
| $La_2O_3$ | 0.50 | 1.0 | 231 | $>10^{14}$ | 37 | 100.0 | 0.37 | good |
| $Dy_2O_3$ | 1.00 | | | | | | | |
| $Yb_2O_3$ | 0.50 | 1.0 | 233 | $>10^{14}$ | 35 | 100.0 | 0.37 | good |
| $Nd_2O_3$ | 0.50 | | | | | | | |
| $CeO_2$ | 0.50 | 1.0 | 240 | $>10^{14}$ | 36 | 100.0 | 0.38 | good |
| $Al_2O_3$ | 0.50 | | | | | | | |
| $Nb_2O_3$ | 0.50 | | | | | | | |

Example 4

$Y_2O_3$ powders having an average grain size of 1μm, boron (B) powders having an average grain size of 3μm, and various oxides as indicated in Table 4 were added respectively in various amounts as indicated in Table 4 to 100 parts by weight of AIN powders having an average grain size of 1μm, together with a mixed solvent of toluene and ethanol. Each mixture was intimately mixed and adequately ball-milled and polyvinylbutyral resin was added thereto as a binder to form an AIN slurry. Each slurry was then subjected to forming by the doctor blade method to form green sheets which were then stamped into formed green products in the form of square segments of 65X65mm.

The products were dewaxed in a nitrogen ambient at 700°C and were thereafter sintered at 1800°C in a nitrogen atmosphere under the atmospheric pressure for 3 hours to obtain AlN plates.

The resultant AlN plates were subjected to testing and measurement for appearance, relative density, thermal conductivity, insulation resistance, and surface roughness, to determine those properties which are generally required for insulating substrate. The results are shown in Table 4.

Among the measured properties, the relative density was calculated by measuring the density of respective sintered bodies according to the Archimedes method and by dividing it by the true density thereof and is indicated in percentage.

The thermal conductivity was measured by laser flush method. The insulation resistance was measured with an insulation resistance tester. The surface roughness (Ra) was measured by a surface roughness tester.

Table 4

| No. | $Y_2O_3$ parts by weight | B parts by weight | Additive | parts by weight | Thermal Conductivity W/mK | Insulation Resistance $\Omega cm$ | Strength kg/mm$^2$ | Relative Density % | Surface Roughness Ra($\mu$m) | Appearance |
|---|---|---|---|---|---|---|---|---|---|---|
| 1 | 2.0 | 0.50 | $Li_2O$ | 0.50 | 182 | $>10^{14}$ | 35 | 100.0 | 0.31 | good |
| 2 | 2.0 | 0.50 | $Li_2O$ | 1.00 | 194 | $>10^{14}$ | 34 | 100.0 | 0.30 | good |
| 3 | 2.0 | 0.50 | $Na_2O$ | 0.50 | 183 | $>10^{14}$ | 32 | 100.0 | 0.32 | good |
| 4 | 2.0 | 0.50 | $Na_2O$ | 1.00 | 190 | $>10^{14}$ | 34 | 100.0 | 0.32 | good |
| 5 | 2.0 | 0.50 | $K_2O$ | 0.50 | 175 | $>10^{14}$ | 35 | 100.0 | 0.31 | good |
| 6 | 2.0 | 0.50 | $K_2O$ | 1.00 | 178 | $>10^{14}$ | 38 | 100.0 | 0.33 | good |
| 7 | 2.0 | 0.50 | $B_2O_3$ | 0.50 | 202 | $>10^{14}$ | 38 | 100.0 | 0.31 | good |
| 8 | 2.0 | 0.50 | $B_2O_3$ | 1.00 | 205 | $>10^{14}$ | 36 | 100.0 | 0.30 | good |
| 9 | 2.0 | 0.50 | $SiO_2$ | 0.50 | 178 | $>10^{14}$ | 37 | 100.0 | 0.33 | good |
| 10 | 2.0 | 0.50 | $SiO_2$ | 1.00 | 177 | $>10^{14}$ | 32 | 100.0 | 0.29 | good |
| 11 | 2.0 | 0.50 | $GeO_2$ | 0.50 | 181 | $>10^{14}$ | 40 | 100.0 | 0.32 | good |
| 12 | 2.0 | 0.50 | $GeO_2$ | 1.00 | 189 | $>10^{14}$ | 31 | 100.0 | 0.34 | good |
| 13 | 2.0 | 0.50 | $As_2O_3$ | 0.50 | 190 | $>10^{14}$ | 36 | 100.0 | 0.33 | good |
| 14 | 2.0 | 0.50 | $As_2O_3$ | 1.00 | 192 | $>10^{14}$ | 37 | 100.0 | 0.31 | good |
| 15 | 2.0 | 0.50 | $P_2O_5$ | 0.50 | 193 | $>10^{14}$ | 35 | 100.0 | 0.30 | good |
| 16 | 2.0 | 0.50 | $P_2O_5$ | 1.00 | 195 | $>10^{14}$ | 31 | 100.0 | 0.29 | good |
| 17 | 2.0 | 1.00 | $Li_2O$ | 0.50 | 205 | $>10^{14}$ | 39 | 100.0 | 0.34 | good |
| 18 | 2.0 | 1.00 | $Li_2O$ | 1.00 | 210 | $>10^{14}$ | 31 | 100.0 | 0.33 | good |
| 19 | 2.0 | 1.00 | $Na_2O$ | 0.50 | 201 | $>10^{14}$ | 31 | 100.0 | 0.35 | good |
| 20 | 2.0 | 1.00 | $Na_2O$ | 1.00 | 198 | $>10^{14}$ | 32 | 100.0 | 0.34 | good |
| 21 | 2.0 | 1.00 | $K_2O$ | 0.50 | 205 | $>10^{14}$ | 37 | 100.0 | 0.36 | good |
| 22 | 2.0 | 1.00 | $K_2O$ | 1.00 | 210 | $>10^{14}$ | 36 | 100.0 | 0.36 | good |
| 23 | 2.0 | 1.00 | $B_2O_3$ | 0.50 | 223 | $>10^{14}$ | 32 | 100.0 | 0.38 | good |
| 24 | 2.0 | 1.00 | $B_2O_3$ | 1.00 | 228 | $>10^{14}$ | 33 | 100.0 | 0.38 | good |

EP 0 393 524 A2

| 25 | 2.0 | 1.00 | $SiO_2$ | 0.50 | | 201 | $>10^{14}$ | 31 | `100.0 | 0.37 | good |
| 26 | 2.0 | 1.00 | $SiO_2$ | 1.00 | | 204 | $>10^{14}$ | 32 | 100.0 | 0.32 | good |
| 27 | 2.0 | 1.00 | $GeO_2$ | 0.50 | | 204 | $>10^{14}$ | 30 | 100.0 | 0.34 | good |
| 28 | 2.0 | 1.00 | $GeO_2$ | 1.00 | | 209 | $>10^{14}$ | 37 | 100.0 | 0.36 | good |
| 29 | 2.0 | 1.00 | $As_2O_3$ | 0.50 | | 198 | $>10^{14}$ | 37 | 100.0 | 0.39 | good |
| 30 | 2.0 | 1.00 | $As_2O_3$ | 1.00 | | 194 | $>10^{14}$ | 36 | 100.0 | 0.38 | good |
| 31 | 2.0 | 1.00 | $P_2O_5$ | 0.50 | | 213 | $>10^{14}$ | 34 | 100.0 | 0.37 | good |
| 32 | 2.0 | 1.00 | $P_2O_5$ | 1.00 | | 217 | $>10^{14}$ | 32 | 100.0 | 0.37 | good |
| 33 | 2.0 | 1.00 | $Li_2O$ | 0.70 | | 220 | $>10^{14}$ | 33 | 100.0 | 0.34 | good |
| | | | $\infty_2O_3$ | 0.70 | | | | | | | |
| 34 | 2.0 | 1.00 | $Li_2O$ | 0.50 | | 221 | $>10^{14}$ | 38 | 100.0 | 0.32 | good |
| | | | $\ell_2O_5$ | 1.00 | | | | | | | |
| 35 | 2.0 | 1.00 | $K_2O$ | 0.50 | | 221 | $>10^{14}$ | 36 | 100.0 | 0.34 | good |
| | | | $\Lambda\epsilon\downarrow_2$ | 1.00 | | | | | | | |
| 36 | 2.0 | 1.00 | $K_2O$ | 0.50 | | 229 | $>10^{14}$ | 34 | 100.0 | 0.29 | good |
| | | 1.00 | $\ell_2O_5$ | 0.80 | | | | | | | |
| | | 1.00 | $B_2O_3$ | 0.80 | | | | | | | |

Example 5

Y$_2$O$_3$ powders having an average grain size of 1μm, boron (B) powders having an average grain size of 3μm, and various compounds as indicated in Table 5 were added respectively in various amounts as indicated in Table 5 to 100 parts by weight of AlN powders having an average grain size of 1μm, together with a mixed solvent of toluene and ethanol. Each mixture was intimately mixed and adequately ball-milled and polyvinylbutyral resin was added thereto as a binder to form an AlN slurry. Each slurry was then subjected to forming by the doctor blade method to form green sheets which were then stamped into formed green products in the form of square segments of 65X65mm.

The products were dewaxed in a nitrogen ambient at 700°C and were thereafter sintered at 1800°C in a nitrogen atmosphere under the atmospheric pressure for 3 hours to obtain AlN plates.

The resultant AlN plates were subjected to testing and measurement for appearance, relative density, thermal conductivity, insulation resistance, and surface roughness, to determine those properties which are generally required for insulating substrate. The results are shown in Table 5.

Among the measured properties, the relative density was calculated by measuring the density of respective sintered bodies according to the Archimedes method and by dividing it by the true density thereof and is indicated in the table in percentage.

The thermal conductivity was measured by laser flush method. The insulation resistance was measured with an insulation resistance tester. The surface roughness (Ra) was measured by a surface roughness tester.

Table 5

| No. | $Y_2O_3$ parts by weight | B parts by weight | Additive | parts by weight | Thermal Conductivity W/mK | Insulation Resistance Ωcm | Strength kg/mm² | Relative Density % | Surface Roughness Ra(μm) | Appearance |
|---|---|---|---|---|---|---|---|---|---|---|
| 1 | 2.0 | 0.50 | $LaB_6$ | 0.50 | 223 | $>10^{14}$ | 33 | 100.0 | 0.29 | good |
| 2 | 2.0 | 0.50 | $LaB_6$ | 1.00 | 235 | $>10^{14}$ | 34 | 100.0 | 0.31 | good |
| 3 | 2.0 | 0.50 | $CaB_6$ | 0.50 | 218 | $>10^{14}$ | 33 | 100.0 | 0.30 | good |
| 4 | 2.0 | 0.50 | $CaB_6$ | 1.00 | 221 | $>10^{14}$ | 35 | 100.0 | 0.31 | good |
| 5 | 2.0 | 0.50 | $Ca_3N_2$ | 0.50 | 234 | $>10^{14}$ | 34 | 100.0 | 0.29 | good |
| 6 | 2.0 | 0.50 | $Ca_3N_2$ | 1.00 | 240 | $>10^{14}$ | 37 | 100.0 | 0.30 | good |
| 7 | 2.0 | 0.50 | $A\ell P$ | 0.50 | 204 | $>10^{14}$ | 37 | 100.0 | 0.31 | good |
| 8 | 2.0 | 0.50 | $A\ell P$ | 1.00 | 207 | $>10^{14}$ | 38 | 100.0 | 0.32 | good |
| 9 | 2.0 | 0.50 | $LiMgP$ | 0.50 | 203 | $>10^{14}$ | 36 | 100.0 | 0.30 | good |
| 10 | 2.0 | 0.50 | $LiMgP$ | 1.00 | 206 | $>10^{14}$ | 35 | 100.0 | 0.34 | good |
| 11 | 2.0 | 0.50 | $CaS$ | 0.50 | 209 | $>10^{14}$ | 37 | 100.0 | 0.32 | good |
| 12 | 2.0 | 0.50 | $CaS$ | 1.00 | 211 | $>10^{14}$ | 36 | 100.0 | 0.33 | good |
| 13 | 2.0 | 0.50 | $BaS$ | 0.50 | 218 | $>10^{14}$ | 39 | 100.0 | 0.34 | good |
| 14 | 2.0 | 0.50 | $BaS$ | 1.00 | 214 | $>10^{14}$ | 32 | 100.0 | 0.33 | good |
| 15 | 2.0 | 0.50 | $MoSi_2$ | 0.50 | 195 | $>10^{14}$ | 33 | 100.0 | 0.32 | good |
| 16 | 2.0 | 0.50 | $MoSi_2$ | 1.00 | 201 | $>10^{14}$ | 32 | 100.0 | 0.31 | good |
| 17 | 2.0 | 0.50 | $CaH_2$ | 0.50 | 234 | $>10^{14}$ | 40 | 100.0 | 0.30 | good |
| 18 | 2.0 | 0.50 | $CaH_2$ | 1.00 | 236 | $>10^{14}$ | 38 | 100.0 | 0.34 | good |
| 19 | 2.0 | 0.50 | $LiA\ell H_4$ | 0.50 | 230 | $>10^{14}$ | 32 | 100.0 | 0.35 | good |
| 20 | 2.0 | 0.50 | $LiA\ell H_4$ | 1.00 | 239 | $>10^{14}$ | 36 | 100.0 | 0.33 | good |
| 21 | 2.0 | 1.00 | $LaB_6$ | 0.50 | 233 | $>10^{14}$ | 35 | 100.0 | 0.36 | good |
| 22 | 2.0 | 1.00 | $CaB_6$ | 0.50 | 222 | $>10^{14}$ | 33 | 100.0 | 0.34 | good |
| 23 | 2.0 | 1.00 | $Ca_3N_2$ | 0.50 | 228 | $>10^{14}$ | 39 | 100.0 | 0.36 | good |
| 24 | 2.0 | 1.00 | $A\ell P$ | 0.50 | 210 | $>10^{14}$ | 34 | 100.0 | 0.36 | good |

| | | | | | | | | | | |
|---|---|---|---|---|---|---|---|---|---|---|
| 25 | 2.0 | 1.00 | LiMgP | 0.50 | 211 | $>10^{14}$ | 37 | 100.0 | 0.35 | good |
| 26 | 2.0 | 1.00 | CaS | 0.50 | 212 | $>10^{14}$ | 36 | 100.0 | 0.38 | good |
| 27 | 2.0 | 1.00 | BaS | 0.50 | 225 | $>10^{14}$ | 34 | 100.0 | 0.37 | good |
| 28 | 2.0 | 1.00 | $MoSi_2$ | 0.50 | 196 | $>10^{14}$ | 36 | 100.0 | 0.38 | good |
| 29 | 2.0 | 1.00 | $MoSi_2$ | 1.00 | 203 | $>10^{14}$ | 34 | 100.0 | 0.34 | good |
| 30 | 2.0 | 1.00 | $CaH_2$ | 0.50 | 240 | $>10^{14}$ | 35 | 100.0 | 0.38 | good |
| 31 | 2.0 | 1.00 | $CaH_2$ | 1.00 | 245 | $>10^{14}$ | 37 | 100.0 | 0.35 | good |
| 32 | 2.0 | 1.00 | $LiA\ell H_4$ | 0.50 | 236 | $>10^{14}$ | 38 | 100.0 | 0.34 | good |
| 33 | 2.0 | 1.00 | $LiA\ell H_4$ | 1.00 | 244 | $>10^{14}$ | 35 | 100.0 | 0.33 | good |
| 34 | 2.0 | 1.00 | $LiA\ell H_4$ | 0.50 | 246 | $>10^{14}$ | 33 | 100.0 | 0.28 | good |
| | | | $LaB_6$ | 0.50 | | | | | | |
| 35 | 2.0 | 1.00 | $CaB_6$ | 0.50 | 241 | $>10^{14}$ | 38 | 100.0 | 0.34 | good |
| | | | $\Omega\alpha\infty_6$ | 0.50 | | | | | | |
| 36 | 2.0 | 1.00 | $Ca_3N_2$ | 1.00 | 239 | $>10^{14}$ | 36 | 100.0 | 0.38 | good |
| | | 1.00 | $\Psi\alpha\Sigma$ | 0.50 | | | | | | |
| 37 | 2.0 | 1.00 | $\dot{C}aS$ | 0.50 | 244 | $>10^{14}$ | 35 | 100.0 | 0.36 | good |
| | | | $\Psi\alpha\P_2$ | 0.50 | | | | | | |
| | | | $CaB_6$ | 0.50 | | | | | | |

17

Example 6

Y$_2$O$_3$ powders having an average grain size of 1μm, LaB$_6$ powders having an average grain size of 3μm, and carbon black (C) having a specific surface of 150m$^2$/g were added respectively in various amounts as indicated in Table 6 to 100 parts by weight of AIN powders having an average grain size of 1μm, together with a mixed solvent of toluene and ethanol. Each mixture was intimately mixed and adequately ball-milled and polyvinylbutyral resin was added thereto as a binder to form an AIN slurry. Each slurry was then subjected to forming by the doctor blade method to form green sheets which were then stamped into formed green products in the form of square segments of 65 X 65mm.

The products were dewaxed in a nitrogen ambient at 700°C and were thereafter sintered at 1800°C in a nitrogen atmosphere under the atmospheric pressure for 3 hours to obtain AIN plates.

The resultant AIN plates were subjected to testing and measurement for appearance, relative density, thermal conductivity, insulation resistance, and surface roughness, to determine those properties which are generally required for insulating substrate. The results are shown in Table 6.

Among the measured properties, the relative density was calculated by measuring the density of respective sintered bodies according to the Archimedes method and by dividing it by the true density thereof and is indicated in Table 6 in percentage.

The thermal conductivity was measured by laser flush method. The insulation resistance was measured with an insulation resistance tester. The surface roughness (Ra) was measured by a surface roughness tester.

18

Table 6    (Sheet 1 of 2)

| No. | Y₂O₃ parts by weight | C parts by weight | LaB₆ parts by weight | Thermal Conductivity W/mK | Insulation Resistance Ωcm | Strength kg/mm² | Relative Density % | Surface Roughness Ra(μm) | Appearance | Remark |
|---|---|---|---|---|---|---|---|---|---|---|
| 1 | 0.1 | 0 | 0 | 130 | $>10^{14}$ | 28 | 98.0 | 0.33 | Irregular Color | Comparative |
| 2 | 0.1 | 0.05 | 0 | 140 | $>10^{14}$ | 28 | 98.2 | 0.33 | ′ | ′ |
| 3 | 0.1 | 0.50 | 0.01 | 171 | $>10^{14}$ | 31 | 99.3 | 0.30 | good | Example |
| 4 | 0.1 | 0.05 | 0.10 | 185 | $>10^{14}$ | 31 | 99.5 | 0.30 | good | ′ |
| 5 | 0.1 | 0.05 | 1.00 | 185 | $>10^{14}$ | 30 | 99.5 | 0.31 | good | ′ |
| 6 | 0.1 | 0.10 | 0.05 | 190 | $>10^{14}$ | 31 | 99.4 | 0.29 | good | ′ |
| 7 | 0.1 | 0.10 | 5.00 | 191 | $>10^{14}$ | 32 | 99.3 | 0.32 | good | ′ |
| 8 | 0.1 | 0.30 | 0.01 | 194 | $>10^{14}$ | 33 | 99.4 | 0.34 | good | ′ |
| 9 | 0.1 | 0.30 | 0.10 | 188 | $>10^{14}$ | 32 | 99.5 | 0.32 | good | ′ |
| 10 | 0.1 | 0.30 | 5.00 | 192 | $>10^{14}$ | 31 | 99.8 | 0.31 | good | ′ |
| 11 | 0.1 | 0.50 | 0.05 | 194 | $>10^{14}$ | 30 | 99.6 | 0.31 | good | ′ |
| 12 | 0.1 | 0.50 | 0.10 | 185 | $>10^{14}$ | 31 | 99.3 | 0.33 | good | ′ |
| 13 | 0.1 | 0.50 | 5.00 | 182 | $>10^{14}$ | 34 | 99.4 | 0.30 | good | ′ |
| 14 | 0.1 | 2.00 | 0.05 | 190 | $>10^{14}$ | 32 | 99.7 | 0.29 | good | ′ |
| 15 | 0.1 | 2.00 | 0.10 | 182 | $>10^{14}$ | 30 | 99.6 | 0.31 | good | ′ |
| 16 | 0.1 | 2.00 | 5.00 | 181 | $>10^{14}$ | 32 | 99.6 | 0.32 | good | ′ |
| 17 | 1.0 | 0.50 | 0 | 160 | $>10^{14}$ | 28 | 98.0 | 0.34 | good | Comperative |
| 18 | 1.0 | 0.05 | 0.01 | 211 | $>10^{14}$ | 39 | 99.9 | 0.32 | good | Example |
| 19 | 1.0 | 0.05 | 0.20 | 206 | $>10^{14}$ | 33 | 99.7 | 0.33 | good | ′ |
| 20 | 1.0 | 0.05 | 1.00 | 213 | $>10^{14}$ | 32 | 99.8 | 0.35 | good | ′ |
| 21 | 1.0 | 0.10 | 0.02 | 210 | $>10^{14}$ | 34 | 99.8 | 0.35 | good | ′ |
| 22 | 1.0 | 0.10 | 0.08 | 227 | $>10^{14}$ | 36 | 99.9 | 0.34 | good | ′ |
| 23 | 1.0 | 0.10 | 2.00 | 213 | $>10^{14}$ | 33 | 99.9 | 0.34 | good | ′ |
| 24 | 1.0 | 0.30 | 0.05 | 224 | $>10^{14}$ | 34 | 99.9 | 0.33 | good | ′ |
| 25 | 1.0 | 0.30 | 0.10 | 225 | $>10^{14}$ | 36 | 100.0 | 0.36 | good | ′ |
| 26 | 1.0 | 0.30 | 1.00 | 230 | $>10^{14}$ | 34 | 100.0 | 0.36 | good | ′ |
| 27 | 1.0 | 0.50 | 0.01 | 212 | $>10^{14}$ | 35 | 99.9 | 0.35 | good | ′ |
| 28 | 1.0 | 0.50 | 0.05 | 219 | $>10^{14}$ | 35 | 99.9 | 0.34 | good | ′ |
| 29 | 1.0 | 0.50 | 0.10 | 228 | $>10^{14}$ | 34 | 99.9 | 0.35 | good | ′ |
| 30 | 1.0 | 0.50 | 1.00 | 230 | $>10^{14}$ | 33 | 99.8 | 0.34 | good | ′ |
| 31 | 1.0 | 2.00 | 0.05 | 196 | $>10^{14}$ | 32 | 99.8 | 0.34 | good | ′ |
| 32 | 1.0 | 2.00 | 0.10 | 200 | $>10^{14}$ | 36 | 100.0 | 0.36 | good | ′ |
| 33 | 1.0 | 2.00 | 1.00 | 204 | $>10^{14}$ | 33 | 99.9 | 0.36 | good | ′ |
| 34 | 1.0 | 0.50 | 5.00 | 206 | $>10^{14}$ | 36 | 100.0 | 0.36 | good | ′ |

Table 6    (Sheet 2 of 2)

| No. | Y₂O₃ parts by weight | C parts by weight | LaB₆ parts by weight | Thermal Conductivity W/mK | Insulation Resistance Ω cm | Strength kg/mm² | Relative Density % | Surface Roughness Ra(μm) | Appearance | Remark |
|---|---|---|---|---|---|---|---|---|---|---|
| 35 | 2.0 | 0.05 | 0.01 | 212 | $>10^{14}$ | 39 | 100.0 | 0.38 | good | Example |
| 36 | 2.0 | 0.05 | 0.10 | 231 | $>10^{14}$ | 38 | 100.0 | 0.38 | good | ' |
| 37 | 2.0 | 0.10 | 0.05 | 230 | $>10^{14}$ | 37 | 100.0 | 0.37 | good | ' |
| 38 | 2.0 | 0.10 | 0.10 | 241 | $>10^{14}$ | 37 | 100.0 | 0.36 | good | ' |
| 39 | 2.0 | 0.10 | 3.00 | 209 | $>10^{14}$ | 39 | 100.0 | 0.36 | good | ' |
| 40 | 2.0 | 0.30 | 0.05 | 242 | $>10^{14}$ | 40 | 100.0 | 0.38 | good | ' |
| 41 | 2.0 | 0.30 | 5.00 | 233 | $>10^{14}$ | 38 | 100.0 | 0.35 | good | ' |
| 42 | 2.0 | 0.50 | 0.05 | 223 | $>10^{14}$ | 37 | 100.0 | 0.34 | good | ' |
| 43 | 2.0 | 0.50 | 5.00 | 230 | $>10^{14}$ | 36 | 100.0 | 0.36 | good | ' |
| 44 | 2.0 | 2.00 | 0.05 | 231 | $>10^{14}$ | 35 | 100.0 | 0.37 | good | ' |
| 45 | 2.0 | 2.00 | 5.00 | 232 | $>10^{14}$ | 34 | 100.0 | 0.38 | good | ' |
| 46 | 3.0 | 0.05 | 0.01 | 214 | $>10^{14}$ | 33 | 100.0 | 0.40 | good | ' |
| 47 | 3.0 | 0.05 | 0.05 | 222 | $>10^{14}$ | 38 | 100.0 | 0.39 | good | ' |
| 48 | 3.0 | 0.05 | 5.00 | 209 | $>10^{14}$ | 40 | 100.0 | 0.37 | good | ' |
| 49 | 3.0 | 0.10 | 0.01 | 199 | $>10^{14}$ | 37 | 100.0 | 0.38 | good | ' |
| 50 | 3.0 | 0.10 | 0.05 | 204 | $>10^{14}$ | 38 | 100.0 | 0.37 | good | ' |
| 51 | 3.0 | 0.10 | 5.00 | 200 | $>10^{14}$ | 38 | 100.0 | 0.38 | good | ' |
| 52 | 3.0 | 0.30 | 0.01 | 198 | $>10^{14}$ | 36 | 100.0 | 0.35 | good | ' |
| 53 | 3.0 · | 0.30 | 0.05 | 230 | $>10^{14}$ | 35 | 100.0 | 0.39 | good | ' |
| 54 | 3.0 | 0.30 | 5.00 | 188 | $>10^{14}$ | 36 | 100.0 | 0.34 | good | ' |
| 55 | 3.0 | 0.50 | 0.01 | 200 | $>10^{14}$ | 36 | 100.0 | 0.38 | good | ' |
| 56 | 3.0 | 0.50 | 0.05 | 211 | $>10^{14}$ | 37 | 100.0 | 0.37 | good | ' |
| 57 | 3.0 | 0.50 | 0.10 | 227 | $>10^{14}$ | 39 | 100.0 | 0.38 | good | ' |
| 58 | 3.0 | 2.00 | 0.05 | 200 | $>10^{14}$ | 33 | 100.0 | 0.38 | good | ' |
| 59 | 3.0 | 2.00 | 0.10 | 189 | $>10^{14}$ | 32 | 100.0 | 0.34 | good | ' |
| 60 | 5.0 | 0.05 | 0.01 | 180 | $>10^{14}$ | 38 | 99.6 | 0.36 | good | ' |
| 61 | 5.0 | 0.05 | 1.00 | 182 | $>10^{14}$ | 37 | 99.5 | 0.38 | good | ' |
| 62 | 5.0 | 0.10 | 0.50 | 183 | $>10^{14}$ | 39 | 99.6 | 0.37 | good | ' |
| 63 | 5.0 | 0.30 | 0.50 | 184 | $>10^{14}$ | 33 | 99.7 | 0.37 | good | ' |
| 64 | 5.0 | 0.50 | 0.01 | 197 | $>10^{14}$ | 33 | 99.8 | 0.41 | good | ' |
| 65 | 5.0 | 0.50 | 1.00 | 196 | $>10^{14}$ | 34 | 99.9 | 0.40 | good | ' |
| 66 | 5.0 | 0.50 | 5.00 | 181 | $>10^{14}$ | 38 | 99.6 | 0.37 | good | ' |
| 67 | 5.0 | 2.00 | 0.01 | 176 | $>10^{14}$ | 30 | 99.6 | 0.39 | good | ' |
| 68 | 5.0 | 2.00 | 1.00 | 188 | $>10^{14}$ | 31 | 99.9 | 0.36 | good | ' |

## Example 7

AIN plates were made in the same manner as in Example 6, except that, in place of LaB₆ and carbon black used in Example 6, various elements or compounds as shown in Table 7 were employed. The plates were tested for appearance, relative density, thermal conductivity, insulation resistance and surface roughness and the results are indicated in Table 7.

Table 7    (Sheet 1 of 2)

| Additive (parts by weight) | | | | | | Thermal Conductivity W/mK | Insulation Resistance $\Omega$ cm | Strength kg/mm$^2$ | Relative Density % | Surface Roughness Ra($\mu$m) | Appear-ance |
|---|---|---|---|---|---|---|---|---|---|---|---|
| CaS | 0.50 | C | 0.30 | $Y_2O_3$ | 2.0 | 210 | $>10^{14}$ | 33 | 100.0 | 0.37 | good |
| CaS | 0.50 | A$\ell$ | 0.30 | $Y_2O_3$ | 2.0 | 208 | $>10^{14}$ | 32 | 100.0 | 0.31 | good |
| CaS | 0.50 | P | 0.30 | $Y_2O_3$ | 2.0 | 210 | $>10^{14}$ | 32 | 100.0 | 0.32 | good |
| CaS | 0.50 | CaH$_2$ | 0.30 | $Y_2O_3$ | 1.5 | 224 | $>10^{14}$ | 31 | 100.0 | 0.31 | good |
| CaS | 0.50 | B$_6$Si | 0.30 | $Y_2O_3$ | 1.5 | 209 | $>10^{14}$ | 31 | 100.0 | 0.35 | good |
| YS | 0.50 | | | $Y_2O_3$ | 1.5 | 210 | $>10^{14}$ | 31 | 100.0 | 0.34 | good |
| ZnS | 0.50 | | | $Y_2O_3$ | 2.0 | 180 | $>10^{14}$ | 37 | 99.9 | 0.34 | good |
| WS$_2$ | 0.50 | | | $Y_2O_3$ | 2.0 | 178 | $>10^{14}$ | 38 | 99.9 | 0.33 | good |
| BeSi | 0.50 | | | $Y_2O_3$ | 2.0 | 190 | $>10^{14}$ | 39 | 99.9 | 0.33 | good |
| BeSi | 0.40 | C | 0.20 | $Y_2O_3$ | 2.0 | 192 | $>10^{14}$ | 38 | 100.0 | 0.33 | good |
| BeSi | 0.40 | LiA$\ell$H$_4$ | 0.20 | $Y_2O_3$ | 2.0 | 193 | $>10^{14}$ | 37 | 100.0 | 0.32 | good |
| BeSi | 0.40 | B | 0.20 | $Y_2O_3$ | 2.0 | 198 | $>10^{14}$ | 33 | 100.0 | 0.39 | good |
| BeSi | 0.40 | A$\ell$ | 0.20 | $Y_2O_3$ | 2.0 | 197 | $>10^{14}$ | 32 | 99.8 | 0.39 | good |
| Zr$_2$Si | 0.50 | C | 0.30 | $Y_2O_3$ | 2.0 | 180 | $>10^{14}$ | 38 | 100.0 | 0.33 | good |
| MoSi$_2$ | 0.50 | | | $Y_2O_3$ | 2.0 | 169 | $>10^{14}$ | 39 | 99.7 | 0.32 | good |
| MoSi$_2$ | 0.50 | C | 0.30 | $Y_2O_3$ | 2.0 | 175 | $>10^{14}$ | 39 | 99.8 | 0.31 | good |
| LiH | 0.22 | | | $Y_2O_3$ | 2.0 | 182 | $>10^{14}$ | 33 | 100.0 | 0.40 | good |
| CaH$_2$ | 0.50 | | | $Y_2O_3$ | 1.5 | 220 | $>10^{14}$ | 31 | 100.0 | 0.33 | good |
| CaH$_2$ | 0.50 | C | 0.30 | $Y_2O_3$ | 1.5 | 234 | $>10^{14}$ | 29 | 100.0 | 0.32 | good |
| CaH$_2$ | 0.50 | S | 0.30 | $Y_2O_3$ | 1.5 | 226 | $>10^{14}$ | 30 | 100.0 | 0.31 | good |
| CaH$_2$ | 0.50 | P | 0.30 | $Y_2O_3$ | 1.5 | 229 | $>10^{14}$ | 30 | 100.0 | 0.33 | good |
| CaH$_2$ | 0.50 | A$\ell$ | 0.30 | $Y_2O_3$ | 1.5 | 233 | $>10^{14}$ | 30 | 100.0 | 0.34 | good |
| LiA$\ell$H$_4$ | 0.50 | | | $Y_2O_3$ | 2.0 | 200 | $>10^{14}$ | 29 | 100.0 | 0.35 | good |
| LiBaH$_3$ | 0.50 | | | $Y_2O_3$ | 2.0 | 203 | $>10^{14}$ | 30 | 99.9 | 0.36 | good |
| LaH$_2$ | 0.50 | | | $Y_2O_3$ | 2.0 | 185 | $>10^{14}$ | 34 | 100.0 | 0.33 | good |
| YH$_2$ | 0.50 | | | $Y_2O_3$ | 2.0 | 205 | $>10^{14}$ | 34 | 100.0 | 0.32 | good |
| Li | 0.50 | | | $Y_2O_3$ | 2.0 | 180 | $>10^{14}$ | 33 | 99.9 | 0.35 | good |
| Li | 0.50 | C | 0.20 | $Y_2O_3$ | 2.0 | 182 | $>10^{14}$ | 36 | 99.9 | 0.34 | good |
| Mg | 0.50 | | | $Y_2O_3$ | 2.0 | 169 | $>10^{14}$ | 33 | 99.7 | 0.36 | good |
| Mg | 0.50 | A$\ell$ | 0.50 | $Y_2O_3$ | 2.0 | 175 | $>10^{14}$ | 36 | 100.0 | 0.33 | good |
| B | 0.20 | | | $Y_2O_3$ | 2.0 | 210 | $>10^{14}$ | 34 | 100.0 | 0.34 | good |
| B | 0.20 | C | 0.20 | $Y_2O_3$ | 2.0 | 214 | $>10^{14}$ | 32 | 100.0 | 0.33 | good |
| A$\ell$ | 0.50 | | | $Y_2O_3$ | 2.0 | 208 | $>10^{14}$ | 33 | 100.0 | 0.35 | good |
| A$\ell$ | 0.50 | Mg | 0.10 | $Y_2O_3$ | 2.0 | 206 | $>10^{14}$ | 33 | 100.0 | 0.36 | good |
| A$\ell$ | 0.50 | C | 0.25 | $Y_2O_3$ | 2.0 | 210 | $>10^{14}$ | 32 | 100.0 | 0.36 | good |
| Si | 0.50 | | | $Y_2O_3$ | 2.0 | 160 | $>10^{14}$ | 34 | 98.9 | 0.34 | good |
| Si | 0.40 | C | 0.20 | $Y_2O_3$ | 2.0 | 161 | $>10^{14}$ | 31 | 99.1 | 0.34 | good |
| Zn | 0.50 | | | $Y_2O_3$ | 2.0 | 170 | $>10^{14}$ | 34 | 99.2 | 0.33 | good |
| S | 0.20 | | | $Y_2O_3$ | 2.0 | 187 | $>10^{14}$ | 33 | 100.0 | 0.35 | good |
| S | 0.20 | P | 0.10 | $Y_2O_3$ | 2.0 | 200 | $>10^{14}$ | 31 | 100.0 | 0.34 | good |
| P | 0.40 | | | $Y_2O_3$ | 2.0 | 198 | $>10^{14}$ | 33 | 100.0 | 0.31 | good |
| As | 0.30 | | | $Y_2O_3$ | 2.0 | 180 | $>10^{14}$ | 32 | 100.0 | 0.39 | good |

Table 7  (Sheet 2 of 2)

| Additive (parts by weight) | | | | | | Thermal Conductivity W/mK | Insulation Resistance Ω cm | Strength kg/mm² | Relative Density % | Surface Roughness Ra(μm) | Appearance |
|---|---|---|---|---|---|---|---|---|---|---|---|
| MgB6 | 0.50 | | | Y2O3 | 2.0 | 203 | $>10^{14}$ | 34 | 100.0 | 0.31 | good |
| MgB6 | 0.50 | C | 0.30 | Y2O3 | 2.0 | 210 | $>10^{14}$ | 32 | 100.0 | 0.33 | good |
| MgB6 | 0.50 | Aℓ | 0.50 | Y2O3 | 2.0 | 214 | $>10^{14}$ | 35 | 100.0 | 0.33 | good |
| MgB6 | 0.50 | LaB6 | 0.40 | Y2O3 | 2.0 | 230 | $>10^{14}$ | 31 | 100.0 | 0.32 | good |
| MgB6 | 0.50 | Ca3N2 | 0.10 | Y2O3 | 2.0 | 224 | $>10^{14}$ | 31 | 100.0 | 0.35 | good |
| MgB6 | 0.50 | Zr2Si | 0.20 | Y2O3 | 2.0 | 190 | $>10^{14}$ | 33 | 99.9 | 0.34 | good |
| CaB6 | 0.50 | | | Y2O3 | 1.5 | 200 | $>10^{14}$ | 34 | 99.9 | 0.33 | good |
| CaB6 | 0.50 | C | 0.15 | Y2O3 | 1.5 | 224 | $>10^{14}$ | 32 | 99.9 | 0.32 | good |
| CaB6 | 0.50 | P | 0.20 | Y2O3 | 1.5 | 218 | $>10^{14}$ | 31 | 100.0 | 0.33 | good |
| CaB6 | 0.50 | Aℓ | 0.50 | Y2O3 | 2.0 | 219 | $>10^{14}$ | 38 | 99.9 | 0.34 | good |
| CaB6 | 0.50 | CaS | 0.25 | Y2O3 | 1.5 | 220 | $>10^{14}$ | 34 | 100.0 | 0.31 | good |
| CaB6 | 0.50 | Ca3P2 | 0.05 | Y2O3 | 1.5 | 217 | $>10^{14}$ | 33 | 100.0 | 0.33 | good |
| CaB6 | 0.50 | CaH2 | 0.05 | Y2O3 | 1.5 | 220 | $>10^{14}$ | 31 | 100.0 | 0.31 | good |
| SrB6 | 0.50 | | | Y2O3 | 2.0 | 201 | $>10^{14}$ | 31 | 100.0 | 0.34 | good |
| YB6 | 1.00 | | | Y2O3 | 1.0 | 230 | $>10^{14}$ | 31 | 100.0 | 0.34 | good |
| YB6 | 0.50 | C | 0.20 | Y2O3 | 1.8 | 236 | $>10^{14}$ | 29 | 100.0 | 0.36 | good |
| Mg3N2 | 0.50 | | | Y2O3 | 2.0 | 210 | $>10^{14}$ | 38 | 99.9 | 0.37 | good |
| Mg3N2 | 0.50 | C | 0.20 | Y2O3 | 2.0 | 218 | $>10^{14}$ | 37 | 100.0 | 0.34 | good |
| Mg3N2 | 0.50 | WS2 | 0.10 | Y2O3 | 2.0 | 214 | $>10^{14}$ | 36 | 100.0 | 0.35 | good |
| Ca3N2 | 0.50 | | | Y2O3 | 1.5 | 230 | $>10^{14}$ | 28 | 100.0 | 0.33 | good |
| Ca3N2 | 0.40 | C | 0.30 | Y2O3 | 1.5 | 244 | $>10^{14}$ | 29 | 100.0 | 0.33 | good |
| Ca3N2 | 0.40 | Ca3P2 | 0.10 | Y2O3 | 1.5 | 232 | $>10^{14}$ | 34 | 100.0 | 0.32 | good |
| Ca3N2 | 0.40 | CaH2 | 0.15 | Y2O3 | 1.5 | 240 | $>10^{14}$ | 39 | 100.0 | 0.31 | good |
| Ca3N2 | 0.40 | MoSi2 | 0.10 | Y2O3 | 2.5 | 230 | $>10^{14}$ | 30 | 100.0 | 0.33 | good |
| YN | 0.50 | | | Y2O3 | 1.5 | 235 | $>10^{14}$ | 31 | 100.0 | 0.33 | good |
| Na3P | 0.30 | C | 0.10 | Y2O3 | 2.0 | 188 | $>10^{14}$ | 38 | 99.9 | 0.36 | good |
| LiMgP | 1.00 | | | Y2O3 | 5.0 | 192 | $>10^{14}$ | 33 | 99.9 | 0.30 | good |
| LiMgP | 0.50 | C | 0.13 | Y2O3 | 2.0 | 194 | $>10^{14}$ | 36 | 99.9 | 0.30 | good |
| LiMgP | 1.00 | Mg | 0.10 | Y2O3 | 2.0 | 193 | $>10^{14}$ | 39 | 99.9 | 0.30 | good |
| LiMgP | 0.50 | B6Si | 0.50 | Y2O3 | 2.0 | 201 | $>10^{14}$ | 39 | 99.9 | 0.31 | good |
| Ca3P2 | 0.50 | | | Y2O3 | 1.5 | 199 | $>10^{14}$ | 34 | 100.0 | 0.32 | good |
| Ca3P2 | 0.40 | CaS | 0.10 | Y2O3 | 1.5 | 209 | $>10^{14}$ | 34 | 99.9 | 0.34 | good |
| Ca3P2 | 0.40 | LiBaH3 | 0.10 | Y2O3 | 1.5 | 207 | $>10^{14}$ | 30 | 100.0 | 0.33 | good |
| Ca3P2 | 0.30 | C | 0.20 | Y2O3 | 1.5 | 200 | $>10^{14}$ | 31 | 99.9 | 0.33 | good |
| Ca3P2 | 0.30 | P | 0.20 | Y2O3 | 1.5 | 210 | $>10^{14}$ | 31 | 99.9 | 0.36 | good |
| YP | 0.20 | | | Y2O3 | 2.0 | 220 | $>10^{14}$ | 30 | 100.0 | 0.39 | good |
| LaP | 0.40 | C | 0.20 | Y2O3 | 2.0 | 218 | $>10^{14}$ | 32 | 100.0 | 0.37 | good |
| Li2S | 0.50 | C | 0.25 | Y2O3 | 2.0 | 180 | $>10^{14}$ | 36 | 99.9 | 0.35 | good |
| K2S | 0.50 | C | 0.25 | Y2O3 | 2.0 | 178 | $>10^{14}$ | 38 | 100.0 | 0.33 | good |
| MgS | 0.50 | | | Y2O3 | 2.0 | 170 | $>10^{14}$ | 37 | 99.6 | 0.33 | good |
| MgS | 0.50 | C | 0.25 | Y2O3 | 2.0 | 173 | $>10^{14}$ | 36 | 99.8 | 0.32 | good |
| CaS | 0.50 | | | Y2O3 | 1.5 | 190 | $>10^{14}$ | 34 | 99.9 | 0.33 | good |

Example 8

AlN plates were made in the same manner as in Example 6, except that, in place of $Y_2O_3$ used in Example 6, various oxides of rare earth metals as shown in Table 8 were employed. The plates were tested for appearance, relative density, thermal conductivity, insulation resistance and surface roughness and the results are indicated in Table 8. As in Example 6, it was noted that the impurities Fe and Si were concentrated in the intergranular boundary.

Table 8

| parts by weight | | LaB$_6$ parts by weight | C parts by weight | Thermal Conductivity W/mK | Insulation Resistance $\Omega$cm | Strength kg/mm$^2$ | Relative Density % | Surface Roughness Ra($\mu$m) | Appearance |
|---|---|---|---|---|---|---|---|---|---|
| La$_2$O$_3$ | 0.01 | 1.0 | 0.3 | 182 | $>10^{14}$ | 33 | 99.7 | 0.33 | good |
| | 0.10 | 1.0 | 0.3 | 210 | $>10^{14}$ | 33 | 100.0 | 0.34 | good |
| | 1.00 | 1.0 | 0.3 | 230 | $>10^{14}$ | 30 | 100.0 | 0.38 | good |
| | 2.00 | 1.0 | 0.3 | 221 | $>10^{14}$ | 29 | 100.0 | 0.39 | good |
| | 5.00 | 1.0 | 0.3 | 205 | $>10^{14}$ | 36 | 100.0 | 0.39 | good |
| CeO$_2$ | 0.01 | 1.0 | 0.3 | 190 | $>10^{14}$ | 35 | 99.9 | 0.33 | good |
| | 0.10 | 1.0 | 0.3 | 193 | $>10^{14}$ | 33 | 100.0 | 0.31 | good |
| | 1.00 | 1.0 | 0.3 | 194 | $>10^{14}$ | 34 | 99.9 | 0.33 | good |
| | 2.00 | 1.0 | 0.3 | 203 | $>10^{14}$ | 34 | 100.0 | 0.36 | good |
| | 5.00 | 1.0 | 0.3 | 197 | $>10^{14}$ | 32 | 100.0 | 0.37 | good |
| Nd$_2$O$_3$ | 0.01 | 1.0 | 0.3 | 190 | $>10^{14}$ | 32 | 99.9 | 0.31 | good |
| | 0.10 | 1.0 | 0.3 | 198 | $>10^{14}$ | 30 | 99.8 | 0.33 | good |
| | 1.00 | 1.0 | 0.3 | 206 | $>10^{14}$ | 36 | 100.0 | 0.37 | good |
| | 2.00 | 1.0 | 0.3 | 210 | $>10^{14}$ | 35 | 100.0 | 0.37 | good |
| | 5.00 | 1.0 | 0.3 | 188 | $>10^{14}$ | 36 | 100.0 | 0.48 | good |
| Sm$_2$O$_3$ | 0.01 | 1.0 | 0.3 | 183 | $>10^{14}$ | 31 | 99.9 | 0.33 | good |
| | 0.10 | 1.0 | 0.3 | 201 | $>10^{14}$ | 32 | 100.0 | 0.36 | good |
| | 1.00 | 1.0 | 0.3 | 210 | $>10^{14}$ | 33 | 100.0 | 0.37 | good |
| | 2.00 | 1.0 | 0.3 | 230 | $>10^{14}$ | 31 | 100.0 | 0.40 | good |
| | 5.00 | 1.0 | 0.3 | 200 | $>10^{14}$ | 36 | 100.0 | 0.39 | good |
| Gd$_2$O$_3$ | 0.01 | 1.0 | 0.3 | 181 | $>10^{14}$ | 32 | 99.7 | 0.33 | good |
| | 0.10 | 1.0 | 0.3 | 190 | $>10^{14}$ | 38 | 100.0 | 0.31 | good |
| | 1.00 | 1.0 | 0.3 | 227 | $>10^{14}$ | 31 | 100.0 | 0.35 | good |
| | 2.00 | 1.0 | 0.3 | 222 | $>10^{14}$ | 32 | 100.0 | 0.36 | good |
| | 5.00 | 1.0 | 0.3 | 190 | $>10^{14}$ | 36 | 99.9 | 0.35 | good |

EP 0 393 524 A2

| | | | | | | | | | |
|---|---|---|---|---|---|---|---|---|---|
| $Dy_2O_3$ | 0.01 | 1.0 | 0.3 | 187 | $>10^{14}$ | 34 | 99.8 | 0.30 | good |
| | 0.10 | 1.0 | 0.3 | 190 | $>10^{14}$ | 35 | 99.9 | 0.29 | good |
| | 1.00 | 1.0 | 0.3 | 215 | $>10^{14}$ | 34 | 100.0 | 0.38 | good |
| | 2.00 | 1.0 | 0.3 | 218 | $>10^{14}$ | 34 | 100.0 | 0.39 | good |
| | 5.00 | 1.0 | 0.3 | 209 | $>10^{14}$ | 32 | 100.0 | 0.40 | good |
| $Yb_2O_3$ | 0.01 | 1.0 | 0.3 | 179 | $>10^{14}$ | 32 | 99.6 | 0.31 | good |
| | 0.10 | 1.0 | 0.3 | 180 | $>10^{14}$ | 31 | 99.8 | 0.32 | good |
| | 1.00 | 1.0 | 0.3 | 193 | $>10^{14}$ | 34 | 99.9 | 0.32 | good |
| | 2.00 | 1.0 | 0.3 | 226 | $>10^{14}$ | 31 | 100.0 | 0.37 | good |
| | 5.00 | 1.0 | 0.3 | 203 | $>10^{14}$ | 34 | 100.0 | 0.37 | good |
| $Y_2O_3$ | 0.80 | 1.0 | 0.3 | 230 | $>10^{14}$ | 34 | 100.0 | 0.36 | good |
| + | | | | | | | | | |
| $La_2O_3$ | 0.90 | | | | | | | | |
| $La_2O_3$ | 0.50 | 1.0 | 0.3 | 231 | $>10^{14}$ | 37 | 100.0 | 0.37 | good |
| © | | | | | | | | | |
| $Dy_2O_3$ | 1.00 | | | | | | | | |
| $Yb_2O_3$ | 0.50 | 1.0 | 0.3 | 233 | $>10^{14}$ | 35 | 100.0 | 0.37 | good |
| © | | | | | | | | | |
| $Nd_2O_3$ | 0.50 | | | | | | | | |
| $Y_2O_3$ | 0.50 | 1.0 | 0.3 | 240 | $>10^{14}$ | 36 | 100.0 | 0.38 | good |
| + | | | | | | | | | |
| $La_2O_3$ | 0.50 | | | | | | | | |
| + | | | | | | | | | |

| | | | | | | | | | | |
|---|---|---|---|---|---|---|---|---|---|---|
| Nd$_2$O$_3$ | 0.50 | | | | | | | | | |

25

Example 9

AlN plates were made in the same manner as in Example 6, except that, in place of carbon black used in Example 6, various carbonaceous additives as shown in Table 9 were employed. The plates were tested for appearance, relative density, thermal conductivity, insulation resistance and surface roughness and the results are indicated in Table 9.

Table 9

| Carbonaceous Additive parts by weight | | $LaB_6$ parts by weight | $Y_2O_3$ parts by weight | Thermal Conductivity W/mK | Insulation Resistance $\Omega$cm | Strength kg/mm$^2$ | Relative Density % | Surface Roughness Ra($\mu$m) | Appearance |
|---|---|---|---|---|---|---|---|---|---|
| Graphite powder | 0.10 | 0.50 | 2.0 | 221 | $>10^{14}$ | 37 | 100.0 | 0.37 | good |
| | 0.50 | 0.50 | 2.0 | 223 | $>10^{14}$ | 37 | 100.0 | 0.31 | good |
| | 1.00 | 0.50 | 2.0 | 219 | $>10^{14}$ | 36 | 100.0 | 0.29 | good |
| Cane sugar | 0.10 | 0.50 | 2.0 | 229 | $>10^{14}$ | 34 | 100.0 | 0.36 | good |
| | 0.50 | 0.50 | 2.0 | 220 | $>10^{14}$ | 36 | 100.0 | 0.32 | good |
| | 1.00 | 0.50 | 2.0 | 214 | $>10^{14}$ | 36 | 100.0 | 0.31 | good |
| Phenol Resin | 0.10 | 0.50 | 2.0 | 224 | $>10^{14}$ | 36 | 100.0 | 0.33 | good |
| | 0.50 | 0.50 | 2.0 | 233 | $>10^{14}$ | 35 | 100.0 | 0.35 | good |
| | 1.00 | 0.50 | 2.0 | 218 | $>10^{14}$ | 36 | 100.0 | 0.34 | good |

EP 0 393 524 A2

## Claims

1. A method of making a sintered body of aluminium nitride comprising the steps of:
adding to 100 parts by weight of powders of aluminium nitride a sintering aid comprising;
(A) 0.05-5 parts by weight, in terms of oxide, of one or more compounds selected from the group consisting of yttria, oxide of scandium and oxide of lanthanoids; and,
(B) 0.01-5 parts by weight of one or more elements selected from the group consisting of metallic lithium, metallic beryllium, metallic magnesium, boron, silicon, sulfur, phosphor, arsenic and metallic zinc;
forming the thus obtained mixture; and,
sintering the thus formed product in a non-oxidizing atmosphere at a temperature of 1400-2000°C.

2. A method of making a sintered body of aluminium nitride comprising the steps of:
adding to 100 parts by weight of powders of aluminium nitride a sintering aid comprising;
(A) 0.05-5 parts by weight, in terms of oxide, of one or more compounds selected from the group consisting of yttria, oxide of scandium and oxide of lanthanoids;
(B) 0.01-5 parts by weight of one or more elements selected from the group consisting of metallic lithium, metallic beryllium, metallic magnesium, boron, silicon, sulfur, phosphor, arsenic and metallic zinc; and,
(C) 0.01-5 parts by weight of one or more compounds selected from the group consisting of metal borides, metal nitrides, metal phosphides, metal sulfides, metal silicides and metal hydrides;
forming the thus obtained mixture; and,
sintering the thus formed product in a non-oxidizing atmosphere at a temperature of 1400-2000°C.

3. A method of making a sintered body of aluminium nitride comprising the steps of:
adding to 100 parts by weight of powders of aluminium nitride a sintering aid comprising;
(A) 0.05-5 parts by weight, in terms of oxide, of one or more compounds selected from the group consisting of yttria, oxide of scandium and oxide of lanthanoids;
(D) 0.01-2 parts by weight, in terms of carbon, of one or more species selected from the group consisting of carbon and those compounds which generate carbon by thermal decomposition when heated at a temperature below 2000°C; and,
(C) 0.01-5 parts by weight of one or more compounds selected from the group consisting of metal borides, metal nitrides, metal phosphides, metal sulfides, metal silicides and metal hydrides;
forming the thus obtained mixture; and,
sintering the thus formed product in a non-oxidizing atmosphere at a temperature of 1400-2000°C.